# EUROPEAN PATENT APPLICATION

(11) **EP 4 772 455 A1**
(43) Date of publication of application: **08.07.2026**
(21) Application number: 23950751.0
(22) Date of filing: 30.08.2023
(51) Int. Cl.: B65G 1/00, B65G 1/137

(54) **AUTOMATIC MOVEMENT DEVICE, MANAGEMENT DEVICE, CONVEYANCE SYSTEM, CONTROL METHOD, AND MANAGEMENT METHOD**

(71) Applicant: Fuji Corporation, Chiryu-shi, Aichi 472-8686 (JP)
(72) Inventor: KUSAKABE Yuika, Chiryu-shi, Aichi 472-8686 (JP); ODA Takuya, Chiryu-shi, Aichi 472-8686 (JP)
(74) Representative: Grünecker Patent- und Rechtsanwälte PartG mbB
(86) International application number: PCT/JP2023/031554
(87) International publication number: WO 2025/046803

(57) **Abstract**

An automatic movement device of the present disclosure is an automatic movement device for use in a conveyance system configured to convey a conveyance object, the automatic movement device including: a movement control section configured to move the conveyance object to a conveyance position of the conveyance object and, when the conveyance object is unable to be placed at the conveyance position, cause a drive section to move the conveyance object to a conveyance position of a next conveyance object and place the conveyance object there.

## Description

### Technical Field

The present description discloses an automatic movement device, a management device, a conveyance system, a control method, and a management method.

### Background Art

Conventionally, as an automatic movement device, there has been proposed a device in which attribute data including a next process location of a conveyance object, a type of the conveyance object, or the like is stored for each conveyance object, and an alternative conveyance destination in a case where the conveyance object cannot be conveyed to a planned conveyance destination is selected based on the attribute data (for example, see Patent Literature 1). This automatic movement device is said to be able to convey the conveyance object to an appropriate alternative conveyance destination.

### Citation List

### Patent Literature

Patent Literature 1: JP-A-2003-285906

### Summary of the Invention

### Technical Problem

However, in Patent Literature 1 described above, it is necessary to set an alternative conveyance destination for each conveyance object, which makes the process complicated. As described above, in a conveyance system, it has been desired to simplify the processing content and move the conveyance object.

The present disclosure has been made to solve such a problem, and a main object of the present disclosure is to provide an automatic movement device, a management device, a conveyance system, a control method, and a management method that can place a conveyance object at a position as close to a planned position as possible by means of a relatively simple technique.

The present disclosure adopts the following means to achieve the above-described main object.

An automatic movement device of the present disclosure is
an automatic movement device for use in a conveyance system configured to convey a conveyance object, the automatic movement device including:
a movement control section configured to move the conveyance object to a conveyance position of the conveyance object and, when the conveyance object is unable to be placed at the conveyance position, cause a drive section to move the conveyance object to a conveyance position of a next conveyance object and place the conveyance object there.

In this automatic movement device, when the conveyance object cannot be placed at the conveyance position corresponding to the conveyance object, the conveyance object is moved to the conveyance position of the next conveyance object and placed there. This automatic movement device can place the conveyance object at a position as close to a planned position as possible by means of a relatively simple technique, without the need to specify an alternative position.

### Brief Description of Drawings

Fig. 1 is a schematic view illustrating an example of delivery system 10 and conveyance system 11.
Fig. 2 is a view illustrating an example of shop 60.
Fig. 3 is a view illustrating an example of automatic movement device 30.
Fig. 4 is a three-view diagram of automatic movement device 30 connected to cart 12.
Fig. 5 is a view illustrating an example of conveyance positions A-1 to A-22 and temporary storage area T of shop 60.
Fig. 6 is a view illustrating an example of conveyance job information 65 stored in storage section 63.
Fig. 7 is a flowchart illustrating an example of a work command processing routine.
Fig. 8 is a view illustrating an example of processing of updating conveyance job information 65.
Fig. 9 is a view illustrating an example of conveyance by an automatic movement process in shop 60.
Fig. 10 is a flowchart illustrating an example of an automatic movement process routine.

### Description of Embodiments

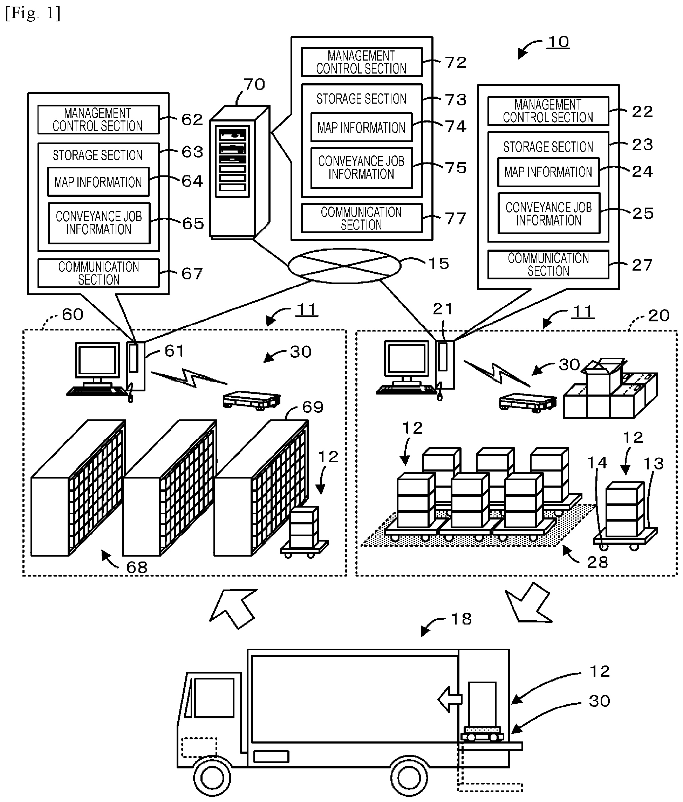

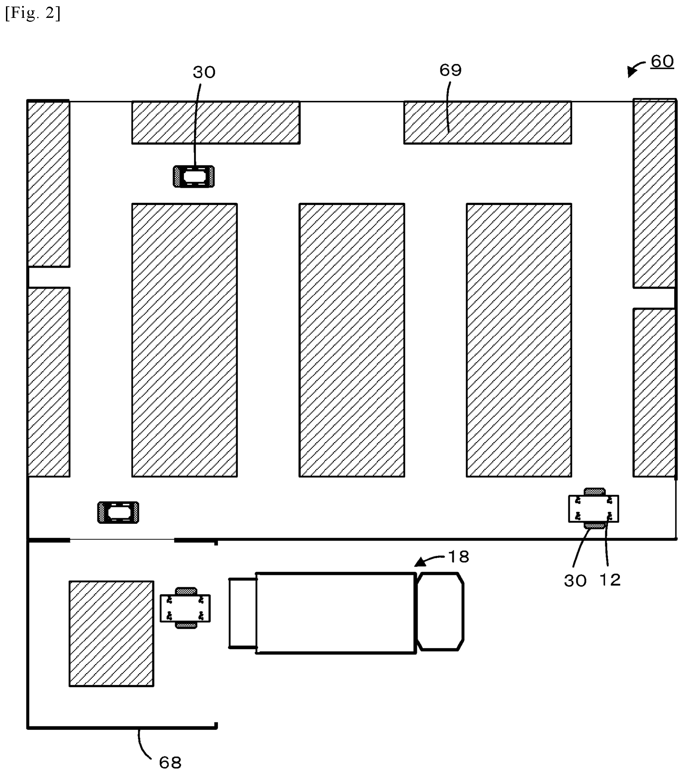

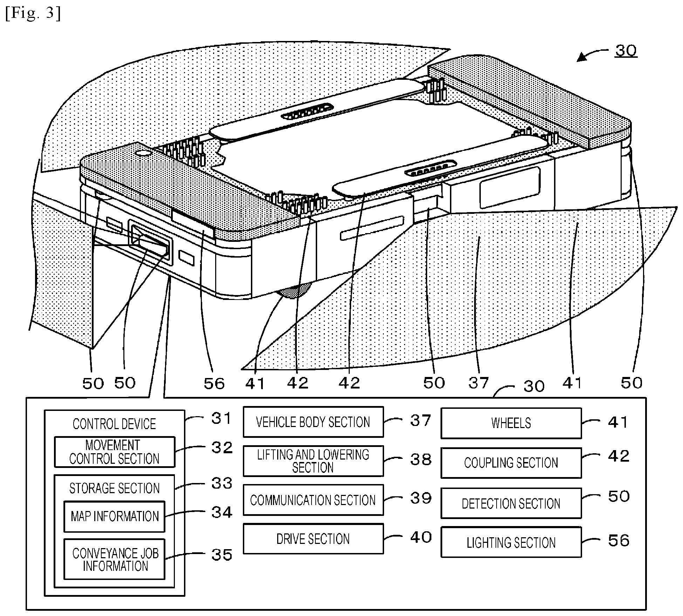

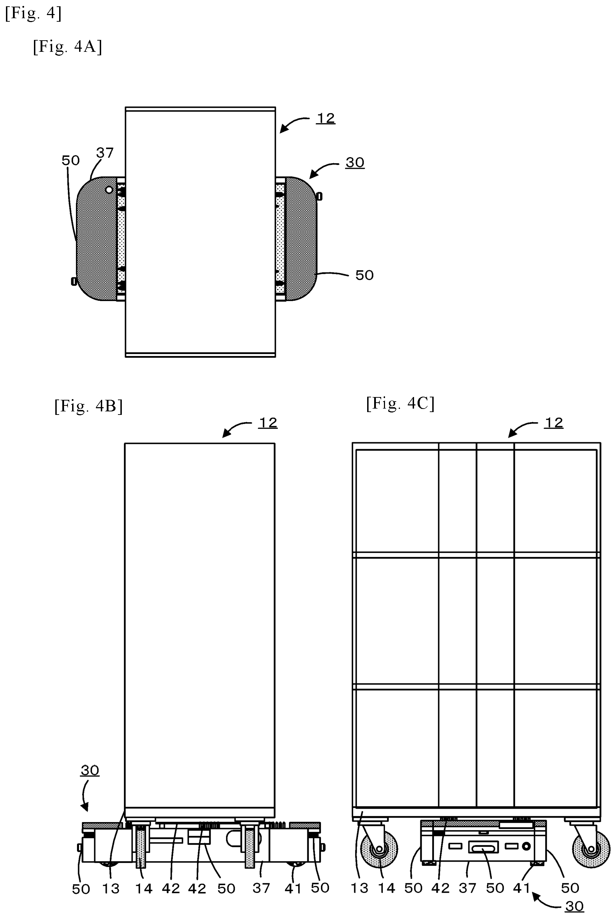

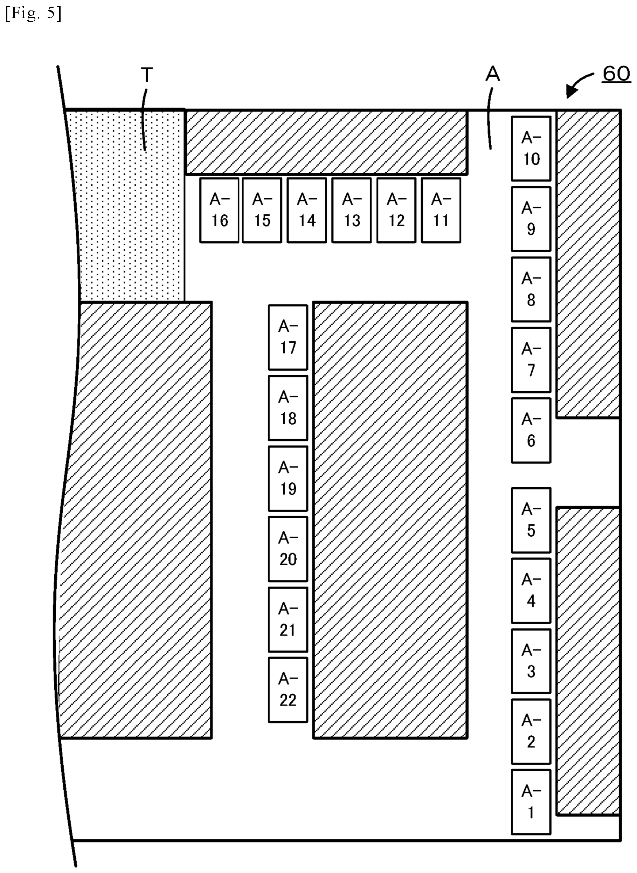

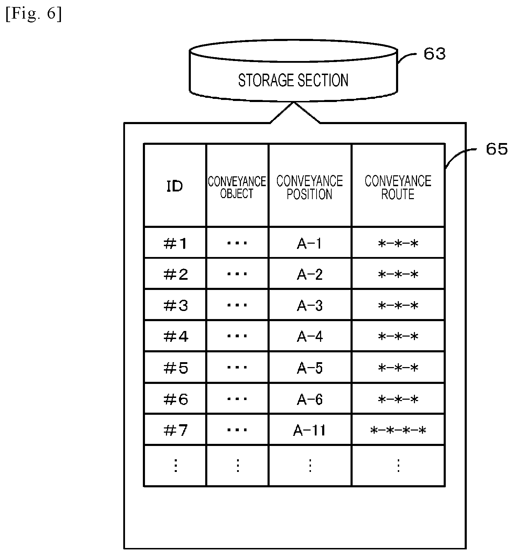

An embodiment of the present disclosure will be described with reference to the drawings. Fig. 1 is a schematic view illustrating an example of delivery system 10. Fig. 2 is a view illustrating an example of shop 60. Fig. 3 is a view illustrating an example of automatic movement device 30. Fig. 4 is a three-view diagram of automatic movement device 30 connected to cart 12, in which Fig. 4A is a plan view, Fig. 4B is a front view, and Fig. 4C is a side view. Fig. 5 is a view illustrating an example of conveyance positions A-1 to A-22 and temporary storage area T of shop 60 included in map information 64 stored in storage section 63. Fig. 6 is a view illustrating an example of conveyance job information 65 stored in storage section 63.

Delivery system 10 includes conveyance system 11 that distributes articles from a delivery source to a delivery destination and conveys articles inside logistics center 20 or shop 60, for example, delivers articles from logistics center 20 to shop 60 and delivers articles from shop 60 to logistics center 20. Conveyance system 11 includes automatic movement device 30 that automatically moves an article as a conveyance object within a specific space, and performs a process of conveying the article. Delivery system 10 will be described by way of example in which the articles are conveyed by using cart 12, but the present disclosure is not particularly limited to this, and cart 12 may be omitted or other components such as a pallet may be used. Conveyance system 11 in logistics center 20 may include logistics PC 21, automatic movement device 30, and cart 12. Conveyance system 11 in shop 60 may include shop PC 61, automatic movement device 30, and cart 12. Here, the "article" is not particularly limited as long as the article is conveyed, and examples of the "article" include industrial products such as a machine, a device, and units and components of devices, as well as household goods, foods, and fresh products that are commonly used on a daily basis. Examples of the "delivery source" and the "delivery destination" include logistics center 20 that collects and delivers articles, a warehouse that stores the articles, and shop 60 that sells the articles. Here, for convenience of description, the following description will be focused on automatic movement device 30 that conveys articles at shop 60 serving as the delivery destination, as conveyance system 11 in delivery system 10.

As illustrated in Fig. 1, delivery system 10 includes logistics PC 21, shop PC 61, automatic movement device 30, and management server 70. Cart 12 is a conveyance object used for conveying articles, and includes placement section 13 and casters 14 as shown in Figs. 1 and 4. Placement section 13 is a flat plate-shaped member on which articles are to be loaded. Casters 14 have wheels that cause cart 12 to travel, and are disposed on a lower surface side of placement section 13. Cart 12 may be a roll cage cart. Delivery vehicle 18 is a vehicle that is loaded with one or more carts 12 and delivers articles. Delivery vehicle 18 loads cart 12 into a baggage compartment at logistics center 20, delivers the articles to the delivery destination, and returns empty cart 12 to logistics center 20.

Logistics center 20 is a place where articles are collected and delivered to shops 60 in various locations or to other logistics centers 20. As illustrated in Fig. 1, logistics center 20 has one or more automatic movement devices 30, so that cart 12 can be automatically moved by automatic movement device 30. In logistics center 20, a worker, an arm robot (not illustrated), or the like performs work of loading the articles onto cart 12 corresponding to the delivery destination. Automatic movement device 30 performs work of collecting, carrying in, and carrying out cart 12 for which the delivery destination is specified.

Logistics PC 21 is provided in logistics center 20, and is configured as a management device that performs product management, management of automatic movement device 30, and the like in logistics center 20. Logistics PC 21 includes management control section 22, storage section 23, and communication section 27. Management control section 22 includes CPU and controls the entire device. Storage section 23 stores various application programs and various data files. Storage section 23 stores map information 24, conveyance job information 25, and the like. Map information 24 includes a map of logistics center 20 as a specific space. Map information 24 defines a movable region based on a building structure, including shapes of walls, pillars, and the like of logistics center 20. Conveyance job information 25 includes information used for conveying articles by automatic movement device 30, such as an initial position of a conveyance source, a conveyance position of a conveyance destination, and an approximate conveyance route, in addition to a conveyance order, a type, a weight, and a size of conveyance objects. Communication section 27 wirelessly communicates with an external device such as automatic movement device 30. Communication section 27 exchanges information with management server 70 and shop PC 61 via network 15.

As illustrated in Figs. 2 to 4, automatic movement device 30 is a vehicle that automatically moves cart 12 as a conveyance object for conveying articles. Automatic movement device 30 enters a space between casters 14 on the lower surface side of placement section 13 of cart 12 and lifts and loads placement section 13 from below or is coupled to cart 12 in such a way that automatic movement device 30 locks into placement section 13 and tows cart 12, thereby moving cart 12. Automatic movement device 30 may be an automatic guided vehicle (AGV) that moves along a line formed on a road surface, a wall surface, or the like, or may be an autonomous mobile robot (AMR) that senses its surroundings and moves along a free route. As illustrated in Fig. 3, automatic movement device 30 includes control device 31, vehicle body section 37, lifting and lowering section 38, communication section 39, drive section 40, coupling section 42, detection section 50, and lighting section 56.

Control device 31 is a controller that controls the entirety of automatic movement device 30, and includes movement control section 32 such as CPU and storage section 33 such as a flash memory. Movement control section 32 outputs control signals and the like to lifting and lowering section 38, drive section 40, communication section 39, and detection section 50, and inputs signals from communication section 39 and detection section 50. Movement control section 32 controls coupling section 42 by controlling lifting and lowering section 38. Movement control section 32 obtains a movement direction, a movement distance, a current position, and the like of automatic movement device 30 based on a driving state of drive section 40 and the like. Movement control section 32 controls the movement and stopping of automatic movement device 30 based on the information from detection section 50, and determines whether there is an object at the conveyance position. Storage section 33 stores various application programs and various data files. Storage section 33 stores, for example, map information 34 and conveyance job information 35. Map information 34 is, for example, information on a map of logistics center 20 when automatic movement device 30 is used in logistics center 20, and is information on a map of shop 60 when automatic movement device 30 is used in shop 60. Conveyance job information 35 is information used to convey an article, and is similar to conveyance job information 25, conveyance job information 65, and the like. Map information 34 and conveyance job information 35 are acquired via communication from management devices such as logistics PC 21, shop PC 61, and management server 70.

Vehicle body section 37 is a flat plate-shaped housing configured to enter below a lower surface of cart 12, and has wheels 41 on a lower surface side thereof and coupling section 42 on an upper surface side thereof. Control device 31, communication section 39, drive section 40, and the like are accommodated inside vehicle body section 37. Detection section 50 is disposed on an outer surface of vehicle body section 37. Communication section 39 is an interface that wirelessly exchanges information with an external device such as logistics PC 21 or shop PC 61. Movement control section 32 exchanges information with an external device via communication section 39. Drive section 40 is a motor that is connected to respective wheels 41 of vehicle body section 37 and that drives automatic movement device 30 to travel by rotationally driving connected wheels 41. Automatic movement device 30 includes four wheels 41 and moves by the rotational drive of wheels 41. Wheels 41 may be mecanum wheels or omni wheels that are independently driven in four-wheel drive and that are capable of moving in longitudinal and lateral directions. Coupling section 42 is a unit that is disposed on an upper surface of vehicle body section 37 and that can be coupled to and decoupled from cart 12 as the conveyance object by lifting and lowering. Coupling section 42 is a structure that loads cart 12 or engages with cart 12 to move cart 12. Lifting and lowering section 38 is a drive section that lifts and lowers coupling section 42.

Detection section 50 is disposed in vehicle body section 37 and detects a state of automatic movement device 30, an object existing in at least a part of the surroundings of automatic movement device 30, and a distance to the object. Detection section 50 may detect the presence of the object and the distance to the object by, for example, irradiating the surroundings with light such as a laser or sound waves and detecting reflected waves. Detection section 50 may be, for example, at least one of an inertial measurement unit, a laser scan sensor, an imaging camera, a stereo camera, and a sonar sensor. Detection section 50 may include a stereo camera disposed on the front of a vehicle or a light detection and ranging (LiDAR) disposed on the front, side, or rear of vehicle body section 37. Lighting section 56 is an LED light that illuminates the surroundings.

As illustrated in Figs. 1 and 2, shop 60 is a commercial facility where conveyed articles are displayed and sold. Shop 60 includes one or more automatic movement devices 30, so that cart 12 can be automatically moved by automatic movement device 30. Shop 60 includes a specific space in which articles are moved, a road surface on which cart 12 existing in the specific space passes, and display shelves 69 on which the articles are displayed. As illustrated in Fig. 2, shop 60 includes stockroom 68 where a conveyance object from delivery vehicle 18 is carried in and out, and a specific space in which display shelves 69 are arranged. A conveyance source of the conveyance object is mainly stockroom 68. Shop PC 61 is disposed in shop 60 and is configured as a management device that performs product management or the like in shop 60. Shop PC 61 includes management control section 62, storage section 63, and communication section 67. In addition, shop PC 61 has a display section and an input device. Display section is a display for displaying an image. The input device includes a keyboard, a mouse, and the like that receive input from worker M. Management control section 62 has CPU and controls the entire device. Storage section 63 stores various application programs and various data files. Storage section 63 stores map information 64 of shop 60, conveyance job information 65 including a job of a conveyance object conveyed by automatic movement device 30, and the like.

As illustrated in Fig. 5, map information 64 includes one or more maps of shop 60 as the specific space. In map information 64, regions such as conveyance positions A-1 to A-22 corresponding to the conveyance destination of the conveyance object and temporary storage area T where the conveyance object is moved when the conveyance object cannot be moved to the conveyance position are set. As illustrated in Fig. 6, conveyance job information 65 includes, in addition to a conveyance order, a type, a weight, and a size of the articles, information used by automatic movement device 30 to convey the articles, such as an initial position that is a conveyance source of the articles, a conveyance position that is a conveyance destination, an approximate conveyance route, and a time at which the articles are to be conveyed. Temporary storage area T is a region where the conveyance object that cannot be moved to the conveyance position is temporarily placed, and one or more regions are provided therefor in the map. In conveyance job information 65, the conveyance position is updated by management control section 62 when the conveyance object cannot be placed at the conveyance position. The updated information is transmitted to management server 70 or the like via communication section 67. Map information 24, map information 34, and map information 74 include the same information as map information 64, and detailed description thereof will be omitted. In addition, conveyance job information 25, conveyance job information 35, and conveyance job information 75 include the same information as conveyance job information 65, and detailed description thereof will be omitted.

Management server 70 is a device that manages delivery system 10. Management server 70 includes management control section 72, storage section 73, and communication section 77. Storage section 73 stores map information 74 that is a database of maps of logistics center 20 and shop 60, and conveyance job information 75 that is a database used to execute and manage conveyance of the articles. Communication section 77 exchanges information with an external device such as logistics PC 21 and shop PC 61 via network 15. Management control section 72 transmits map information 74 and conveyance job information 75 via communication section 77 based on a request from logistics PC 21 or shop PC 61.

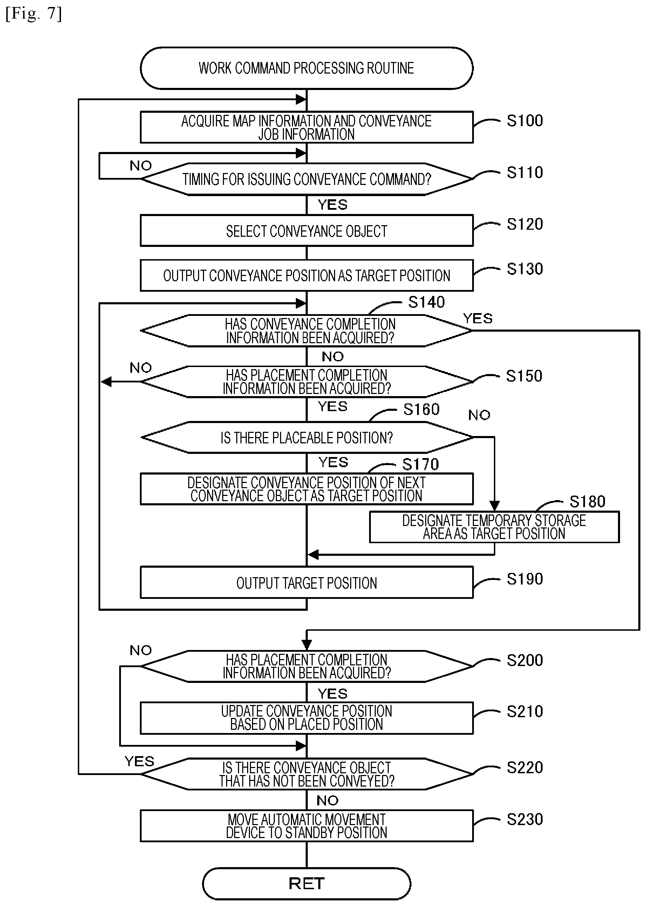

Next, in conveyance system 11 configured as described above, first, a process in which automatic movement device 30 conveys a conveyance object within a specific space in response to a command from shop PC 61 will be described. Here, a process of moving the conveyance object to the conveyance position in shop 60 in conveyance system 11 will be described as an example of a specific example. This process can be executed by, for example, management control section 22 of logistics PC 21, management control section 72 of management server 70, or the like in the same manner as in shop PC 61. Fig. 7 is a flowchart illustrating an example of a work command processing routine executed by management control section 62 of shop PC 61. This routine is stored in storage section 63, and is executed after shop PC 61 is activated. When this routine is started, first, management control section 62 of shop PC 61 reads and acquires map information 64 and conveyance job information 65 from storage section 63 (S100). Next, management control section 62 determines whether it is a timing for issuing a conveyance command for the conveyance object by automatic movement device 30 (S110). Management control section 62 performs this determination based on the conveyance time included in conveyance job information 65. When the current time is not the timing for issuing a conveyance command, management control section 62 waits as it is, and, when the current time is the timing for issuing a conveyance command, management control section 62 selects the conveyance object based on conveyance job information 65 (S120).

Next, management control section 62 acquires the conveyance position of the selected conveyance object from conveyance job information 65, sets the conveyance position as a target position of automatic movement device 30, and outputs the conveyance position to automatic movement device 30 (S130). In this case, management control section 62 also outputs an initial position where the conveyance object is located. Upon receiving this, automatic movement device 30 loads the conveyance object at the initial position, and then moves to the conveyance position which is the target position. Next, management control section 62 determines whether conveyance completion information has been acquired from automatic movement device 30 (S140). The conveyance completion information is information that is output after automatic movement device 30 has placed the conveyance object at the conveyance position. When the conveyance completion information has not been acquired from automatic movement device 30, management control section 62 determines whether placement completion information has been acquired from automatic movement device 30 (S150). The placement completion information is information that is output by automatic movement device 30 when another article has already been placed at the conveyance position where the conveyance object is to be placed. In this case, automatic movement device 30 needs to move the conveyance object to a target position different from the current position. When the placement completion information has been acquired, management control section 62 determines whether there is a placeable position for placing the corresponding conveyance object (S160), and, when there is a placeable position, management control section 62 designates a conveyance position of a next conveyance object in conveyance job information 65 as the target position (S170). Here, management control section 62 sets a target position so as to move the conveyance object, at the conveyance position of which an object has already been placed, to a conveyance position of a next conveyance object. The expression "conveyance position of a next conveyance object" refers to a conveyance position to which a conveyance object planned to be conveyed next to the conveyance object currently being conveyed is to be conveyed in accordance with the conveyance order defined in conveyance job information 65. In addition, even when conveyance job information 65 is updated, the expression "conveyance position of a next conveyance object" refers to a conveyance position to which a conveyance object planned to be conveyed next is to be conveyed, as defined in conveyance job information 65 after the update. In addition, in S160, management control section 62 determines that there is no placeable position when there is no conveyance position of the next conveyance object. When there is no placeable position in S160, management control section 62 designates temporary storage area T as the target position (S180).

After S180 or S170, management control section 62 outputs the designated target position to automatic movement device 30 (S190). Automatic movement device 30 that has acquired the target position performs, for example, a process of moving the conveyance object to the conveyance position of the next conveyance object or temporary storage area T. After S190 or when the placement completion information has not been acquired in S 150, management control section 62 repeatedly executes the processes in and after S140. On the other hand, when the conveyance completion information has been acquired from automatic movement device 30 in S 140, management control section 62 determines whether the placement completion information has been acquired, in conveying the corresponding conveyance object (S200). When the placement completion information has been acquired, management control section 62 updates the conveyance position of conveyance job information 65 based on the placed position, since the target position of the conveyance object has been changed one or more times (S210).

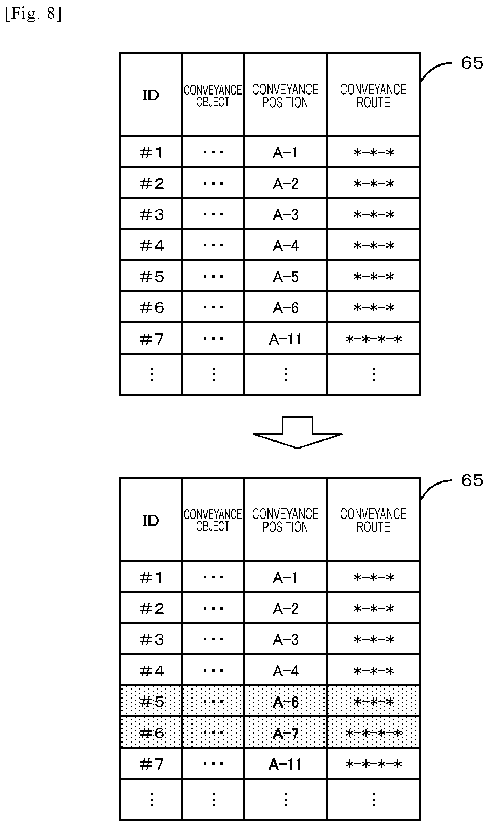

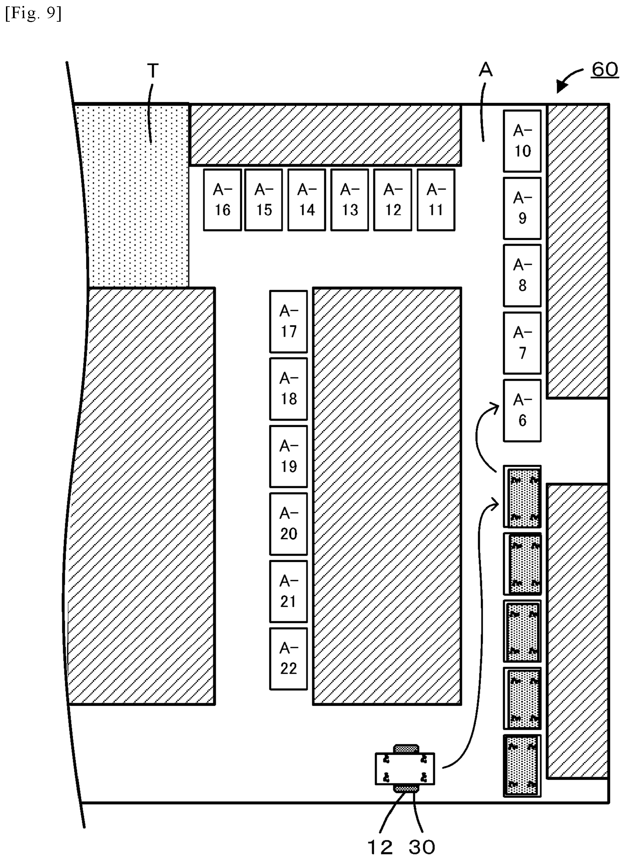

Fig. 8 is a view illustrating an example of processing of updating conveyance job information 65. Fig. 9 is a view illustrating an example of conveyance by an automatic movement process in shop 60. Figs. 8 and 9 illustrate an example in which a conveyance object with ID #5 cannot be placed at conveyance position A-5 and is placed at conveyance position A-6 of a next conveyance object. Management control section 62 changes original conveyance position A-5 to conveyance position A-6 arranged for the conveyance object with #5, and sets conveyance positions sequentially lowered for subsequent conveyance objects, for example, conveyance position A-7 for a conveyance object with #6 as the target position. In addition, conveyance position A-11 of a conveyance object with #7, which is not a continuous conveyance position, is not changed because the conveyance object can be placed at a conveyance position therebetween. In this way, when the conveyance object is placed at the next conveyance position, an already placed object exists during the movement of the next conveyance object, resulting in a need to change the conveyance position successively. However, by updating conveyance job information 65, the next conveyance object can be moved to the conveyance position more reliably.

After S210 or when the placement information has not been acquired in S200, management control section 62 determines whether there is a conveyance object that has not been conveyed, based on conveyance job information 65 (S220). When there is a conveyance object that has not been conveyed, management control section 62 executes the processes in and after S100. That is, management control section 62 repeatedly executes processes such as acquiring latest map information 64 and conveyance job information 65, selecting a conveyance object, and outputting a conveyance position of the selected conveyance object to automatic movement device 30 as a target position. On the other hand, when there is no conveyance object that has not been conveyed in S220, management control section 62 outputs a command to automatic movement device 30 to move to a standby position, thereby causing automatic movement device 30 to move to the standby position (S230), and ends this routine.

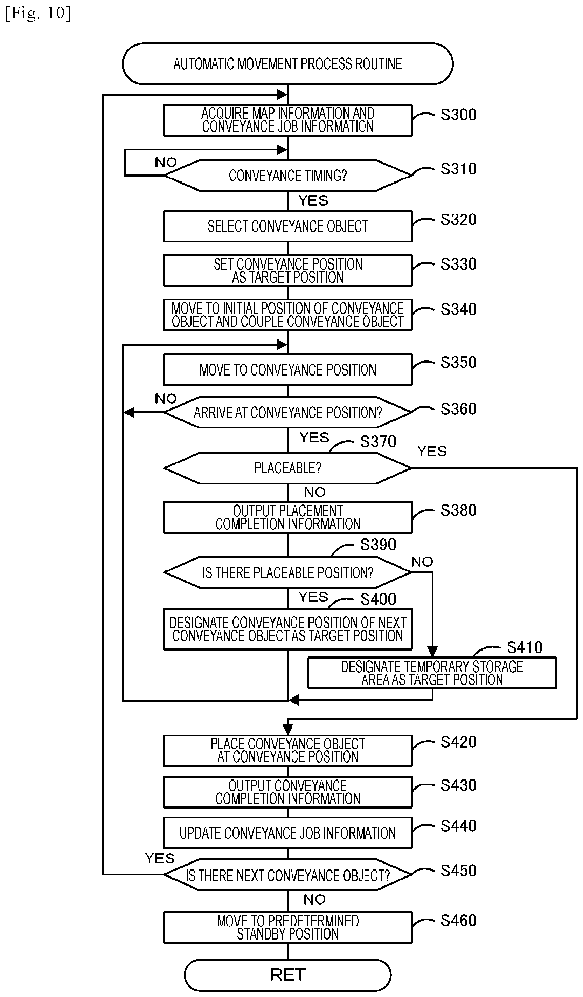

Next, processes executed by control device 31 of automatic movement device 30 will be described. Here, in conveyance system 11, a process in which automatic movement device 30 autonomously conveys a conveyance object within a specific space instead of a command from shop PC 61 will be described. Fig. 10 is a flowchart illustrating an example of an automatic movement process routine executed by control device 31 of automatic movement device 30. This routine is stored in storage section 33, and is executed by movement control section 32 after automatic movement device 30 is activated. When this routine is started, first, movement control section 32 reads and acquires map information 34 and conveyance job information 35 from storage section 33 (S300). Movement control section 32 may acquire map information 34 and conveyance job information 35 from shop PC 61. Next, movement control section 32 determines whether it is a timing for conveying a conveyance object (S310). Movement control section 32 performs this determination based on the conveyance time included in conveyance job information 35. When the current time is not the timing for conveying a conveyance object, movement control section 32 waits as it is, and, when the current time is the timing for issuing a conveyance command, movement control section 32 selects the conveyance object based on conveyance job information 35 (S320).

Next, movement control section 32 acquires the conveyance position of the selected conveyance object from conveyance job information 35, and sets the conveyance position as a target position (S330). In this case, movement control section 32 also acquires an initial position where the conveyance object is located. Next, movement control section 32 moves to the initial position and couples the conveyance object (S340), and moves to the conveyance position which is the target position (S350). In this case, movement control section 32 may move along the conveyance route included in conveyance job information 35. Next, movement control section 32 determines whether automatic movement device 30 has arrived at the conveyance position (S360), and, when automatic movement device 30 has not arrived at the conveyance position, movement control section 32 executes the process of S350. On the other hand, when automatic movement device 30 has arrived at the conveyance position, it is determined whether the conveyance object can be placed at the conveyance position (S370). Movement control section 32 determines whether an object has already been placed at the conveyance position based on the detection value from detection section 50. When the conveyance object cannot be placed at the conveyance position, the placement completion information is output to shop PC 61 (S380). Upon receiving the information, shop PC 61 stores, in storage section 63, information indicating that the corresponding conveyance object is not placed at the initial conveyance position, as management processing for the conveyance object.

After S380, movement control section 32 determines whether there is a placeable position for placing the corresponding conveyance object (S390), and, when there is a placeable position, movement control section 32 designates a conveyance position of a next conveyance object in conveyance job information 35 as the target position (S400). Here, movement control section 32 sets a target position so as to move the conveyance object, at the conveyance position of which an object has already been placed, to a conveyance position of a next conveyance object. In addition, in S390, movement control section 32 determines that there is no placeable position when there is no conveyance position of the next conveyance object. When there is no placeable position in S390, movement control section 32 designates temporary storage area T as the target position (S410). After S410 or S400, or when automatic movement device 30 has not arrived at the conveyance position in S360, movement control section 32 executes the processes in and after S350. After S400 and S410, movement control section 32 performs, for example, a process of moving the conveyance object to the conveyance position of the next conveyance object or temporary storage area T. As a specific example, as illustrated in Fig. 8 described above, when the conveyance object with ID #5 cannot be placed at conveyance position A-5, movement control section 32 places the conveyance object at conveyance position A-6 of the next conveyance object. When an already placed object is also present at the next conveyance position, movement control section 32 moves the conveyance object to a conveyance position of a further subsequent conveyance object.

On the other hand, when the conveyance object can be placed at the conveyance position in S370, movement control section 32 places the conveyance object at the conveyance position (S420), and outputs conveyance completion information to shop PC 61 (S430). Movement control section 32 releases the coupling of coupling section 42 at the conveyance position. Shop PC 61 that has acquired the conveyance completion information stores the conveyance object and the conveyance position in storage section 63 in order to manage the conveyance object. Similarly to S210, movement control section 32 updates the conveyance position when the placement completion information is output. When conveyance job information 35 is updated, movement control section 32 can appropriately adjust the conveyance positions of the subsequent conveyance objects. Subsequently, movement control section 32 updates conveyance job information 35 as necessary (S440), and determines whether there is a conveyance object that has not been conveyed, based on conveyance job information 35 (S450). When there is a conveyance object that has not been conveyed, movement control section 32 executes the processes in and after S300. That is, movement control section 32 repeatedly executes processes such as acquiring latest map information 34 and conveyance job information 35, selecting a conveyance object, and outputting a conveyance position of the selected conveyance object to automatic movement device 30 as a target position. On the other hand, when there is no conveyance object that has not been conveyed in S450, movement control section 32 causes automatic movement device 30 to move to a standby position (S460), and ends this routine.

Here, correspondence relationships between the elements of the present embodiment and the elements of the present disclosure will be clarified. Logistics PC 21, shop PC 61, and management server 70 of the present embodiment are examples of a management device of the present disclosure, management control sections 22, 62, and 72 are examples of a management control section, and conveyance system 11 is an example of a conveyance system. In addition, automatic movement device 30 is an example of an automatic movement device of the present disclosure, movement control section 32 is an example of a movement control section, and drive section 40 is an example of a drive section. In the present embodiment, an example of the management method of the present disclosure is clarified by describing the operation of shop PC 61, and an example of the control method of the automatic movement device of the present disclosure is also clarified by describing the operation of automatic movement device 30.

Automatic movement device 30 of the present embodiment described above is for use in conveyance system 11 configured to convey a conveyance object, and includes: movement control section 32 configured to move the conveyance object to a conveyance position of the conveyance object and, when the conveyance object is unable to be placed at the conveyance position, cause drive section 40 to move the conveyance object to a conveyance position of a next conveyance object and place the conveyance object there. In automatic movement device 30, when the conveyance object cannot be placed at the conveyance position corresponding to the conveyance object, the conveyance object is moved to the conveyance position of the next conveyance object and placed there. Automatic movement device 30 can place the conveyance object at a position as close to a planned position as possible by means of a relatively simple technique, without the need to specify an alternative position.

In addition, movement control section 32 repeatedly moves the conveyance object to a conveyance position of a next conveyance object until the conveyance object reaches a conveyance position where the conveyance object is able to be placed. Automatic movement device 30 can more reliably place the conveyance object at a position as close to a planned position as possible. In addition, when the conveyance object is unable to be placed at the conveyance position associated with the conveyance object and is subsequently able to be placed at a conveyance position of a subsequent conveyance object, movement control section 32 updates a conveyance position of a conveyance object next to the conveyance object according to the conveyance position where the conveyance object is able to be placed. Automatic movement device 30 can more efficiently place the conveyance object by updating the conveyance position.

Shop PC 61 as the management device of the present embodiment is for use in conveyance system 11 including automatic movement device 30 configured to convey a conveyance object, and includes management control section 62 configured to, when automatic movement device 30 is unable to place the conveyance object at a conveyance position of the conveyance object, output a command to automatic movement device 30 to move the conveyance object to a conveyance position of a next conveyance object and place the conveyance object there. In shop PC 61, when the conveyance object cannot be placed at the conveyance position corresponding to the conveyance object, the conveyance object is moved to the conveyance position of the next conveyance object and placed there. Shop PC 61 can place the conveyance object at a position as close to a planned position as possible by means of a relatively simple technique, without the need to specify an alternative position.

In addition, management control section 62 outputs a command to automatic movement device 30 to repeatedly move the conveyance object to a conveyance position of a next conveyance object and place the conveyance object there until the conveyance object reaches a conveyance position where the conveyance object is able to be placed. Shop PC 61 can more reliably place the conveyance object at a position as close to a planned position as possible. In addition, when the conveyance object is unable to be placed at the conveyance position associated with the conveyance object and is subsequently able to be placed at a conveyance position of a subsequent conveyance object, management control section 62 updates a conveyance position of a conveyance object next to the conveyance object according to the conveyance position where the conveyance object is able to be placed. Shop PC 61 can more efficiently place the conveyance object by updating the conveyance position.

Conveyance system 11 of the present embodiment includes automatic movement device 30 described above and shop PC 61 as the management device described above. Conveyance system 11 includes automatic movement device 30 and shop PC 61 described above, and therefore can place the conveyance object at a position as close to a planned position as possible by means of a relatively simple technique.

It goes without saying that the present disclosure is not limited to the embodiment described above in any way, and hence can be implemented in various aspects as long as the aspects fall within the technical scope of the present disclosure.

For example, in the above-described embodiment, in the process of Fig. 10, automatic movement device 30 stores conveyance job information 35 and autonomously changes the conveyance position of the conveyance object regardless of a command from shop PC 61, but the present disclosure is not particularly limited to this. For example, automatic movement device 30 may acquire the conveyance position and convey the conveyance object only in response to a command from shop PC 61 without storing conveyance job information 35. When shop PC 61 cannot place the conveyance object at the conveyance position of the conveyance object, shop PC 61 outputs a command to automatic movement device 30 to move the conveyance object to a conveyance position of a next conveyance object and place the conveyance object there. Therefore, when automatic movement device 30 cannot place the conveyance object at the conveyance position of the conveyance object, automatic movement device 30 executes a process of moving and placing the conveyance object at a conveyance position of a next conveyance object. Therefore, in automatic movement device 30 as well, it is possible to place the conveyance object at a position as close to a planned position as possible by means of a relatively simple technique, without the need to specify an alternative position.

In the above-described embodiment, when management control section 62 has already acquired the placement completion information in S200, management control section 62 updates the conveyance position of conveyance job information 65 in S210 based on the placed position, but the present disclosure is not limited to this, and the update of conveyance job information 65 may be omitted. In this case, although the next conveyance object has already been placed, automatic movement device 30 sequentially changes the conveyance positions to further subsequent ones, so that the conveyance object can be placed at a position as close to a planned position as possible by means of a relatively simple technique.

In the above-described embodiment, after outputting the placement completion information, movement control section 32 updates the conveyance position of conveyance job information 35 in S440 based on the placed position, but the present disclosure is not limited to this, and the update of conveyance job information 35 may be omitted. In this case, although the next conveyance object has already been placed, automatic movement device 30 sequentially changes the conveyance positions to further subsequent ones, so that the conveyance object can be placed at a position as close to a planned position as possible by means of a relatively simple technique.

In the above-described embodiment, shop PC 61 is the management device, and the conveyance of the conveyance object by automatic movement device 30 at shop 60 has been described, but the present disclosure is not particularly limited to this, and logistics PC 21 may be the management device, and may be applied to the conveyance of the conveyance object by automatic movement device 30 at logistics center 20, or the management device may be management server 70, and automatic movement device 30 may convey the conveyance object at logistics center 20 and/or shop 60.

In the above-described embodiment, the present disclosure has been described as shop PC 61 or automatic movement device 30, but the present disclosure is not particularly limited to this, and may be applied to conveyance system 11, the management method of automatic movement device 30, or the control method of automatic movement device 30, or may be a program thereof.

The present disclosure may be configured as follows. For example, the control method of the automatic movement device of the present disclosure is a control method executed by a computer to control an automatic movement device for use in a conveyance system configured to convey a conveyance object, the control method including:
a step of moving the conveyance object to a conveyance position of the conveyance object and, when the conveyance object is unable to be placed at the conveyance position, causing a drive section to move the conveyance object to a conveyance position of a next conveyance object and place the conveyance object there.

In this control method, similarly to the above-described automatic movement device, it is possible to place the conveyance object at a position as close to a planned position as possible by means of a relatively simple technique. In the control method of the automatic movement device, various aspects of the automatic movement device described above may be adopted, and steps may be added to achieve each function of the automatic movement device described above.

The management method of the present disclosure is
a management method executed by a computer and for use in a conveyance system including an automatic movement device configured to convey a conveyance object, the management method including:
a step of, when the automatic movement device is unable to place the conveyance object at a conveyance position of the conveyance object, outputting a command to the automatic movement device to move the conveyance object to a conveyance position of a next conveyance object and place the conveyance object there.

In this management method, similarly to the above-described management device, it is possible to place the conveyance object at a position as close to a planned position as possible by means of a relatively simple technique. In the management method, various aspects of the management device described above may be adopted, and steps may be added to achieve each function of the management device described above.

The present description also discloses a technical idea in which "the automatic movement device according to Claim 1 or 2" in Claim 7 as originally filed is changed to "the automatic movement device according to any one of Claims 1 to 3" and a technical idea in which "the management device according to Claim 4 or 5" is changed to "the management device according to any one of Claims 4 to 6".

### Industrial Applicability

The present disclosure is applicable to the technical field of a distribution system that conveys articles.

### Reference Signs List

10: Delivery system, 11: Conveyance system, 12: Cart, 13: Placement section, 14: Caster, 15: Network, 18: Delivery vehicle, 20: Logistics center, 21: Logistics PC, 22: Management control section, 23: Storage section, 24: Map information, 25: Conveyance job information, 27: Communication section, 30: Automatic movement device, 31: Control device, 32: Movement control section, 33: Storage section, 34: Map information, 35: Conveyance job information, 37: Vehicle body section, 38: Lifting and lowering section, 39: Communication section, 40: Drive section, 41: Wheels, 42: Coupling section, 50: Detection section, 56: Lighting section, 60: Shop, 61: Shop PC, 62: Management control section, 63: Storage section, 64: Map information, 65: Conveyance job information, 67: Communication section, 68: Stockroom, 69: Display shelf, 70: Management server, 72: Management control section, 73: Storage section, 74: Map information, 75: Conveyance job information, 77: Communication section, A-1 to A-22: Conveyance position, T: Temporary storage area

## Claims

1. An automatic movement device for use in a conveyance system configured to convey a conveyance object, the automatic movement device comprising:
a movement control section configured to move the conveyance object to a conveyance position of the conveyance object and, when the conveyance object is unable to be placed at the conveyance position, cause a drive section to move the conveyance object to a conveyance position of a next conveyance object and place the conveyance object there.

2. The automatic movement device according to Claim 1, wherein the movement control section repeatedly moves the conveyance object to a conveyance position of a next conveyance object until the conveyance object reaches a conveyance position where the conveyance object is able to be placed.

3. The automatic movement device according to Claim 1 or 2, wherein when the conveyance object is unable to be placed at the conveyance position associated with the conveyance object and is subsequently able to be placed at a conveyance position of a subsequent conveyance object, the movement control section updates a conveyance position of a conveyance object next to the conveyance object according to the conveyance position where the conveyance object is able to be placed.

4. A management device for use in a conveyance system including an automatic movement device configured to convey a conveyance object, the management device comprising:
a management control section configured to, when the automatic movement device is unable to place the conveyance object at a conveyance position of the conveyance object, output a command to the automatic movement device to move the conveyance object to a conveyance position of a next conveyance object and place the conveyance object there.

5. The management device according to Claim 4,wherein the management control section outputs a command to the automatic movement device to repeatedly move the conveyance object to a conveyance position of a next conveyance object and place the conveyance object there until the conveyance object reaches a conveyance position where the conveyance object is able to be placed.

6. The management device according to Claim 4 or 5, wherein when the conveyance object is unable to be placed at the conveyance position associated with the conveyance object and is subsequently able to be placed at a conveyance position of a subsequent conveyance object, the management control section updates a conveyance position of a conveyance object next to the conveyance object according to the conveyance position where the conveyance object is able to be placed.

7. A conveyance system comprising:
the automatic movement device according to Claim 1 or 2; and
the management device according to Claim 4 or 5.

8. A control method executed by a computer to control an automatic movement device for use in a conveyance system configured to convey a conveyance object, the control method comprising:
a step of moving the conveyance object to a conveyance position of the conveyance object and, when the conveyance object is unable to be placed at the conveyance position, causing a drive section to move the conveyance object to a conveyance position of a next conveyance object and place the conveyance object there.

9. A management method executed by a computer and for use in a conveyance system including an automatic movement device configured to convey a conveyance object, the management method comprising:
a step of, when the automatic movement device is unable to place the conveyance object at a conveyance position of the conveyance object, outputting a command to the automatic movement device to move the conveyance object to a conveyance position of a next conveyance object and place the conveyance object there.
